# DEMANDE DE BREVET EUROPEEN

(11) **EP 3 730 717 A1**
(43) Date de publication de la demande: **28.10.2020**
(21) Numéro de dépôt: 20168330.7
(22) Date de dépôt: 06.04.2020
(51) Int. Cl.: E04F 13/08, F16B 13/04, F16B 5/07

(54) **ENSEMBLE DE PAREMENT ET SYSTÈME D'HABILLAGE POUR UNE CONSTRUCTION**

(30) Priorité: 24.04.2019 FR 1904327
(71) Demandeur: Popup House, 13100 Aix en Provence (FR)
(72) Inventeur: THIERCELIN, CORENTIN, 13100 AIX EN PROVENCE (FR)
(74) Mandataire: Brungard, Yves Francois

(57) **Abrégé**

Un ensemble de parement comporte une plaque (10) de parement et au moins un élément d'accrochage (3) fixé au dos de la plaque (10). L'élément d'accrochage (3) comporte au moins un téton (30) faisant saillie d'une surface d'appui (310) d'une semelle (31) selon un axe de téton (30) et se logeant dans un trou (100) de la plaque (10), chaque téton (30) présentant un profil en dents (301), le sommet des dents (301) étant compris dans un cylindre extérieur de diamètre dit extérieur supérieur à celui du trou (100), la base des dents (301) étant comprise dans un cylindre de diamètre dit de base inférieur à celui du trou (100), le sommet des dents (301) étant en forme de pointe triangulaire dont la médiatrice à l'extérieur de la pointe est orientée vers la semelle (31).

## Description

### Domaine de l'invention

L'invention concerne un ensemble de parement comportant une plaque de parement et au moins un élément d'accrochage fixé au dos de la plaque pour permettre son accrochage sur une ossature. Elle concerne également un système d'habillage d'une construction utilisant un tel ensemble.

### État de la technique

Dans le domaine du bâtiment, la structure n'est en général pas exposée directement à la vue. Avec les exigences croissantes en matière d'isolation thermique il est fréquent de prévoir un habillage extérieur ou intérieur maintenu sur une ossature laquelle est fixée à la structure du bâtiment. Un isolant thermique est souvent intégré à la structure et est quelquefois maintenu par l'ossature. Un espace libre doit être maintenu entre l'habillage et l'isolant.

On connaît différentes techniques d'habillage et d'ossature. Une technique est de réaliser l'ensemble en bois, avec des montants espacés régulièrement et des lames clouées ou vissées sur ces montants. Dans certaines configurations, les lames se recouvrent en « écaille ». Cette technique ne répond pas à toutes les exigences architecturales. De plus, sa mise en œuvre est longue. Les clous et les vis peuvent restés apparents et sont soumis aux intempéries en cas d'utilisation en extérieur.

L'ossature est parfois métallique, avec des rails en U ou en oméga. Les lames de bois peuvent être remplacées par des panneaux de parement en matières minérales ou synthétiques. De telles matières sont par exemple de la pierre naturelle, des plaques de plâtre, un composite de poudre minérale et de résine synthétique, un composite de ciment et de particules de bois. La technique de fixation reste le vissage, ce qui laisse encore les vis apparentes. De plus, les panneaux sont susceptibles de se dilater ou se rétracter en fonction des variations de température et d'hygrométrie. Il faut donc prévoir des trous de passage des vis avec un jeu important et des rondelles sous les têtes de vis ou des têtes de vis très larges. Malgré cela, si la mise en œuvre n'est pas soignée, des contraintes importantes peuvent apparaître sur les panneaux ou les moyens de fixation et entraîner des dégradations.

Le document FR 2 628 775 propose la construction d'un mur dont le parement extérieur est réalisé par des éléments de béton empilés. Les éléments comportent en partie supérieure un tenon qui vient en prise avec une rainure de la partie inférieure de l'élément superposé. Des équerres sont fixées sur des montants en bois et comporte une aile qui s'insère entre deux éléments au niveau de l'assemblage tenon-rainure. Ce système n'a plus de vis apparentes, mais il n'est applicable qu'à des éléments épais. Pour des éléments minces, l'assemblage tenon-rainure serait trop peu sûr. De plus, cette technique limite les dimensions de l'élément en béton du fait de l'absence de maintien intermédiaire.

Dans le document GB 1 478 916, un panneau est muni à son dos d'un cadre rapporté, lequel vient en prise avec une ossature fixée au mur. Le cadre rapporté comporte en particulier une traverse en L dont l'une des ailes vient s'accrocher dans la fente d'un support fixé au mur. Ce document ne précise pas comment les panneaux peuvent être fixés au cadre. L'utilisation d'un tel cadre n'est pas optimal, car il ajoute du poids à un panneau déjà encombrant.

### Objectifs de l'invention

C'est donc un objectif de l'invention de proposer un système de construction permettant d'habiller une paroi de bâtiment dont la mise en œuvre soit simple, rapide, peu coûteuse et avec une tenue garantie. C'est aussi un objectif de permettre l'utilisation de panneaux minces et de grande dimensions.

### Exposé de l'invention

Avec ces objectifs en vue, l'invention a pour objet un ensemble de parement comportant une plaque de parement et au moins un élément d'accrochage fixé au dos de la plaque, caractérisé en ce que l'élément d'accrochage comporte au moins un téton faisant saillie d'une surface d'appui d'une semelle selon un axe de téton et se logeant dans un trou de la plaque, chaque téton présentant un profil en dents, le sommet des dents étant compris dans un cylindre extérieur de diamètre dit extérieur supérieur à celui du trou, la base des dents étant comprise dans un cylindre de diamètre dit de base inférieur à celui du trou, le sommet des dents étant en forme de pointe triangulaire dont la médiatrice à l'extérieur de la pointe est orientée vers la semelle.

Grâce à l'invention, on peut munir une plaque de parement du nombre nécessaire d'éléments d'accrochage au dos de la plaque afin de pouvoir accrocher celle-ci avec une tenue suffisante. De manière surprenante, on a constaté que les tétons pouvaient être insérés en force dans des trous de la plaque jusqu'à ce que la semelle fasse butée, et que le téton est alors retenu dans le trou. Le profil en dents permet une pénétration facilitée mais aussi l'ancrage du téton dans le trou ou une retenue augmentée. L'orientation des dents facilite l'insertion du téton mais s'oppose à son retrait hors du trou par l'arc-boutement des dents. Le téton peut être une forme de révolution de telle sorte que les dents correspondent à des anneaux circulaires. Ce pourrait aussi être une forme hélicoïdale ou ondulée.

Le trou peut être débouchant, mais de préférence, il est borgne. Ainsi la face apparente de la plaque, opposée au dos, reste lisse et sans vis apparente.

Selon des caractéristiques du téton :
» l'angle au sommet est compris entre 40° et 80°. Il est ainsi suffisamment résistant tout en permettant une pénétration de la dent dans la matière de la plaque ou un arc-boutement de la dent lors d'un effort de retrait.
• le pas entre les dents est compris entre 0,5 mm et 1,5 mm, de préférence entre 0,8 mm et 1,2 mm. On dispose ainsi d'un nombre suffisant de dents pour répartir la charge d'accrochage.
• l'une des faces de la pointe des dents est perpendiculaire à l'axe de téton. Cette face peut ainsi être obtenue par moulage et assure l'orientation des dents la plus inclinée possible avec cette contrainte de démoulage.
• la profondeur des dents est comprise entre 0,6 et 0,2 mm, de préférence entre 0,5 et 0,3 mm.

Selon une caractéristique constructive, la différence entre le diamètre extérieur du téton et le diamètre intérieur du trou rapportée au diamètre extérieur du téton est comprise entre 3 % et 12 %, de préférence entre 4 % et 9 %, de préférence entre 5 % et 6 %. Une différence trop faible n'assure pas de serrage suffisant. Une différence trop importante gêne l'insertion du téton et génère des contraintes au risque de fissurer la plaque autour du trou. On a trouvé que les plages de différence énoncées précédemment permettent d'obtenir de bonnes performances de tenue sans dégrader la plaque.

Selon un perfectionnement, la semelle a une forme allongée entre une première et une deuxième extrémité, l'élément d'accrochage comportant au moins un téton à chacune des extrémités et un crochet faisant saillie de la semelle sur une surface apparente de la semelle opposée à la surface d'appui sensiblement à équidistance des tétons. Cette disposition permet d'augmenter la résistance d'un crochet en augmentant le nombre d'ancrages. De plus, les tétons ne sont ainsi pas soumis à des sollicitations en torsion, mais uniquement en efforts en déplacement, à savoir en arrachement et en cisaillement, ce à quoi ils résistent mieux qu'à des sollicitations en rotation.

Selon une disposition constructive, le crochet s'étend sensiblement sur la même largeur que la semelle, l'élément d'accrochage comportant une nervure s'étendant à mi-largeur de la semelle en partie sur le crochet et sur la surface apparente. On a déterminé que ces dispositions permettaient d'obtenir une grande résistance du crochet à une traction perpendiculaire à la semelle, en évitant son ouverture qui anéantirait sa capacité d'accrochage.

Selon une disposition constructive, le crochet comporte une paroi de rétention sensiblement parallèle à la semelle reliée à la semelle par une paroi de liaison, et une paroi de guidage prolongeant la paroi de rétention à l'opposé de la paroi de liaison en s'éloignant de la semelle de sorte à délimiter un espace d'entrée pour guider un support entre la semelle et la paroi de rétention. La paroi de guidage facilite l'accrochage tout en permettant une grande précision du placement en permettant de limiter le jeu entre la paroi de rétention et la semelle.

Selon un perfectionnement, la semelle comporte un plateau surélevé par rapport à la surface apparente en regard de la paroi de rétention. On peut ainsi choisir l'espacement entre le dos de la plaque et l'élément sur lequel le crochet vient en prise.

Selon des caractéristiques constructives, la matière de l'élément d'accrochage est une matière synthétique ayant un module de Young compris entre 200 et 5000 Mpa et la plaque a un module de Young compris entre 3 et 20 Gpa.

L'invention a aussi pour objet un système d'habillage d'un bâtiment comportant une ossature fixée sur le bâtiment et comportant au moins un rail destiné à être fixé à l'horizontale, le système comportant au moins un ensemble, tel que défini précédemment, suspendu au rail par l'élément d'accrochage. On peut ainsi constituer l'habillage d'une paroi de bâtiment tel qu'un mur, en extérieur ou en intérieur, par la juxtaposition d'ensembles sur une série de rails. Chaque ensemble peut être suspendu par le nombre adéquat d'éléments d'accrochage en fonction de la tenue mécanique de chaque point d'accrochage et des sollicitations auxquelles l'ensemble doit résister. Ces sollicitations sont en particulier celles dues au vent en extérieur. La pose sur un rail continu a l'avantage de laisser la possibilité de mouvement horizontal de l'ensemble, en fonction des dilatations par effet thermique et hygrométrique. On évite ainsi la création de contraintes dans le parement dues à ces dilations. De plus, le poseur n'a que la préoccupation de la hauteur de pose et de l'horizontalité. Il n'a aucun réglage à faire lors de la pose du rail concernant la position axiale, si ce n'est les extrémités. Les rails pourraient être des profilés en aluminium, par exemple de forme rectangulaire ou oblongue, fixés à une ossature par l'intermédiaire de plots.

Selon un mode de réalisation, le rail est un profilé en matière synthétique et comporte une base destinée à être fixée à un élément de construction, et un contre-crochet faisant saillie de la base sur lequel l'ensemble est suspendu par l'élément d'accrochage. La base permet la fixation du rail à des montants, par exemple par vissage ou clouage, et confère une bonne rigidité, en particulier dans le plan vertical.

Selon un perfectionnement, le rail présente une surface supérieure demi-cylindrique. Cette forme, en combinaison avec la surface de guidage des crochets, permet de faciliter l'insertion des crochets dans les contre-crochets.

### Brève description des figures

L'invention sera mieux comprise et d'autres particularités et avantages apparaîtront à la lecture de la description qui va suivre, la description faisant référence aux dessins annexés parmi lesquels :
[Fig.1] : la figure 1 est une vue schématique d'une façade recouverte partiellement par un système d'habillage selon l'invention ;
[Fig.2] : la figure 2 est une vue en perspective d'un ensemble destiné à habiller la façade de la figure 1 ;
[Fig.3] : la figure 3 est une vue en perspective d'un rail et d'un élément d'accrochage du système d'habillage de la figure 1 ;
[Fig.4] : la figure 4 est une vue en perspective d'un élément d'accrochage utilisé avec l'ensemble de la figure 2 ;
[Fig.5] : la figure 5 est une de côté de l'élément d'accrochage de la figure 4 ;
[Fig.6] : la figure 6 est une vue en perspective d'un élément d'accrochage selon un deuxième mode de réalisation ;
[Fig.7] : la figure 7 une vue en perspective d'un élément d'accrochage selon un troisième mode de réalisation ;
[Fig.8] : la figure 8 une vue en perspective d'un élément d'accrochage selon un quatrième mode de réalisation ;

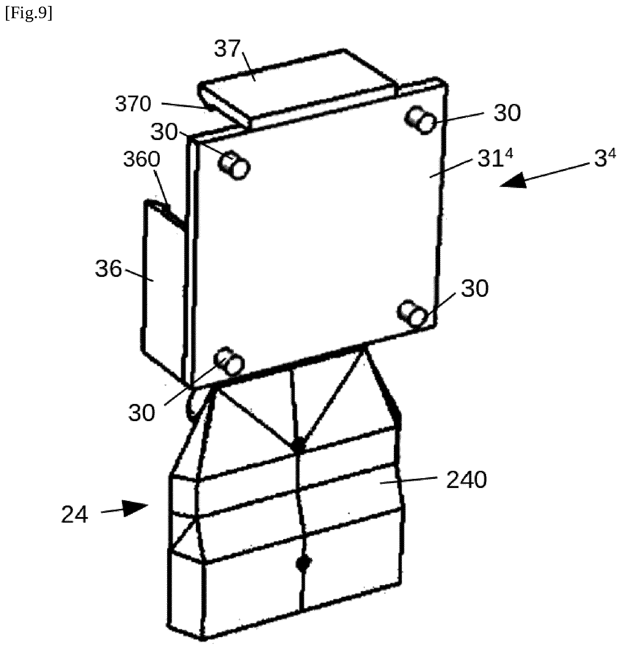

[Fig.9] : la figure 9 une vue en perspective d'un élément d'accrochage selon un cinquième mode de réalisation.

### Description détaillée

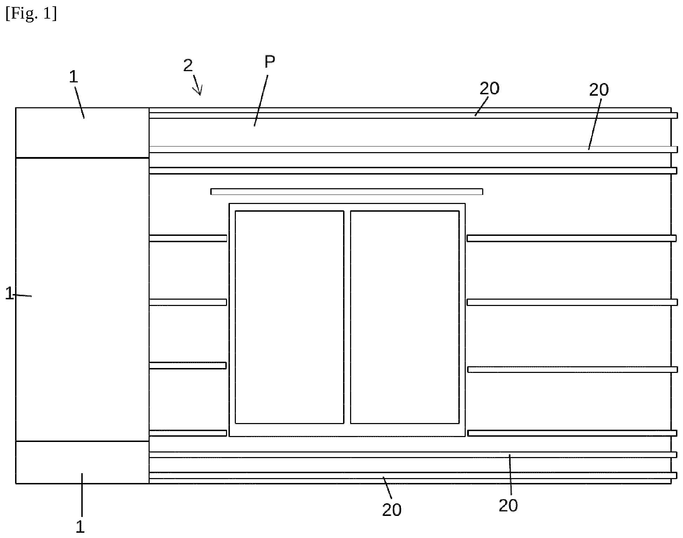

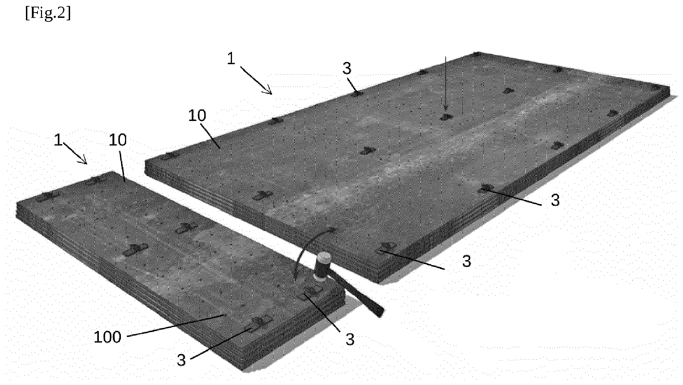

Dans un premier mode de réalisation de l'invention, montré sur les figures 1 à 5, un système d'habillage d'un bâtiment comporte des ensembles de parement 1, tels que montrés sur les figures 1 et 2, suspendus à une ossature 2 fixée une paroi P du bâtiment. Chaque ensemble de parement 1 comporte une plaque 10 de parement, les plaques 10 de parement étant placées de manière coplanaire et juxtaposées pour couvrir la paroi P à habiller. Chaque plaque 10 de parement comporte en outre une pluralité d'éléments d'accrochage 3 fixés au dos de la plaque 10.

La plaque 10 de parement est par exemple réalisée avec une matière composite de fibres et de ciment, par exemple de fibres de bois ou de fibres de cellulose. Ce peut être aussi une matière composite de fibres et de résine synthétique. Ce pourra être aussi une lame de bois brut ou traitée thermiquement. La plaque 10 a par exemple un module de Young compris entre 3 et 20 Gpa.

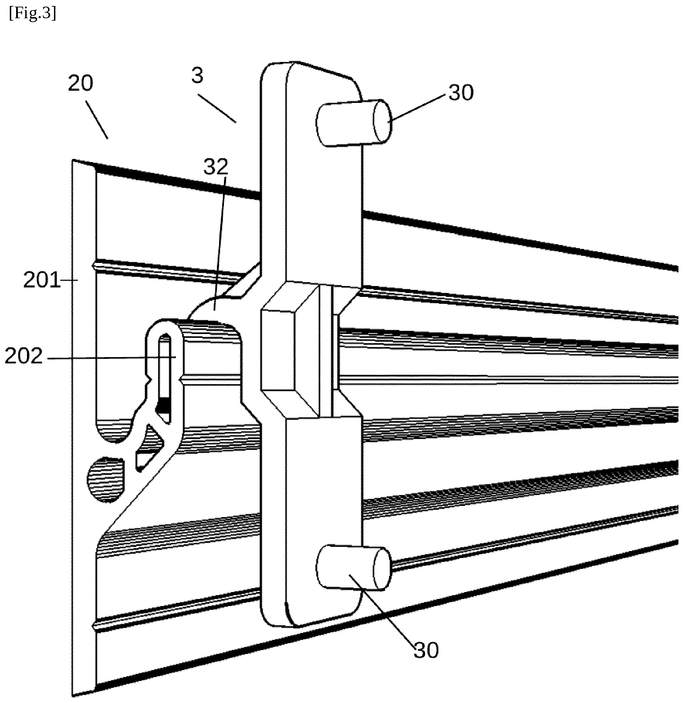

L'ossature 2 comporte une pluralité de rails 20 s'étendant horizontalement, comme le montre la figure 1. Le rail 20 est un profilé extrudé en matière synthétique et comporte une base 201 destinée à être fixée à des montants verticaux, non représentés, et un contre-crochet 202 faisant saillie de la base 201, comme le montre la figure 3. Le contre-crochet 202 présente une surface supérieure demi-cylindrique. La figure 3 montre également un élément d'accrochage 3 seul en prise avec le contre-crochet 202 pour suspendre l'ensemble de parement 1 dont l'élément d'accrochage 3 fait partie.

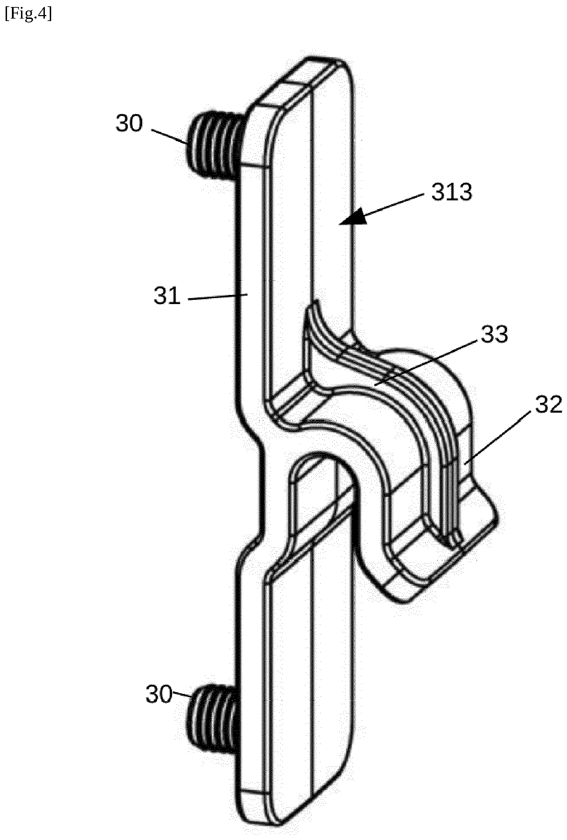

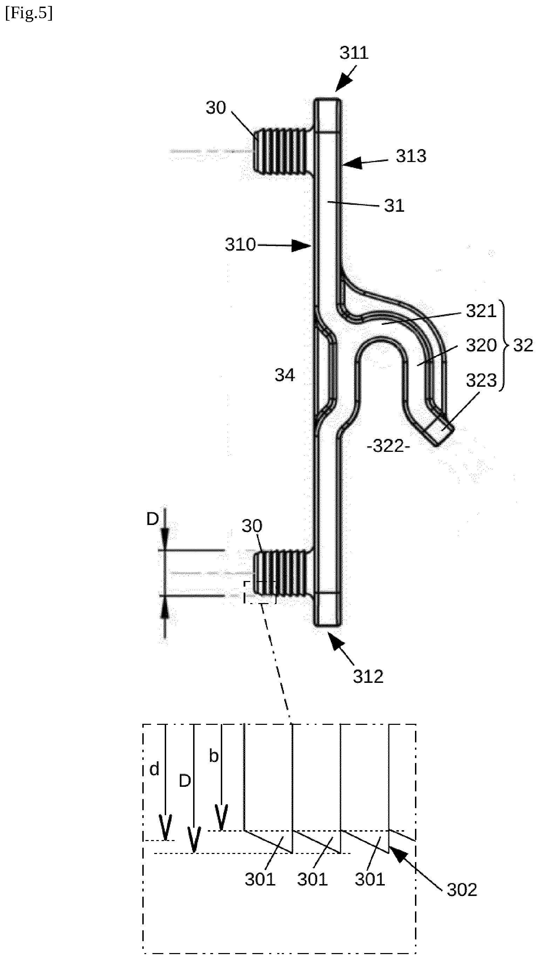

L'élément d'accrochage 3 est montré seul sur les figures 4 et 5. L'élément d'accrochage 3 comporte deux tétons 30 faisant saillie d'une surface d'appui 310 d'une semelle 31 selon un axe de téton 30 perpendiculaire à la surface d'appui 310. La semelle 31 a une forme allongée, sensiblement rectangulaire, entre une première et une deuxième extrémité 311, 312, l'un et l'autre des tétons 30 étant disposé à chacune des extrémités 311, 312.

L'élément d'accrochage 3 comporte en outre un crochet 32 faisant saillie de la semelle 31 sur une surface apparente 313 de la semelle 31 opposée à la surface d'appui 310 sensiblement à équidistance des tétons 30. Le crochet 32 s'étend sensiblement sur la même largeur que la semelle 31. L'élément d'accrochage 3 comporte une nervure 33 s'étendant à mi-largeur de la semelle 31 en partie sur le crochet 32 et sur la semelle 31. Le crochet 32 comporte une paroi de rétention 320 sensiblement parallèle à la semelle 31 reliée à la semelle 31 par une paroi de liaison 321, et une paroi de guidage 323 prolongeant la paroi de rétention 320 à l'opposé de la paroi de liaison 321 en s'éloignant de la semelle 31 de sorte à délimiter un espace d'entrée 322 pour guider un support entre la semelle 31 et la paroi de rétention 320. L'élément d'accrochage 3 comporte un plateau 34 surélevé par rapport à la surface apparente en regard de la paroi de rétention 320.

Chaque téton 30 présente un profil en dents 301, de sorte à dessiner des anneaux régulièrement répartis le long de la longueur du téton 30. Le sommet des dents 301 est en forme de pointe triangulaire dont la médiatrice à l'extérieur de la pointe est orientée vers la semelle 31. L'angle au sommet est de 70°. L'une des faces 302 de la pointe des dents 301 est perpendiculaire à l'axe de téton 30 de telle sorte que cette face 302 appartient à un plan et dessine une couronne en regard de la semelle 31. Le pas entre les dents 301 est de 1 mm.

L'assemblage de l'élément d'accrochage 3 avec la plaque 10 est réalisé par l'insertion à force de chaque téton 30 dans un trou 100 borgne de la plaque 10, la retenue du téton 30 étant essentiellement du fait du serrage entre le téton 30 et la plaque 10. Pour cela, le sommet des dents 301 est compris dans un cylindre extérieur de diamètre dit extérieur D supérieur au diamètre d du trou 100 et la base des dents 301 est comprise dans un cylindre de diamètre dit de base b inférieur à celui du trou 100. La différence entre le diamètre extérieur D du téton 30 et le diamètre intérieur d du trou 100 rapportée au diamètre extérieur D du téton 30 (D - d)/D est comprise entre 3 % et 12 %, de préférence entre 4 % et 9 %, de préférence entre 5 % et 6%.

L'élément d'accrochage 3 est par exemple réalisé par moulage de matière thermoplastique ou thermodurcissable. La matière est par exemple un polyéthylène à haute densité, un polyamide, un polycarbonate ou un polyméthacrylate de méthyle. Il peut incorporer des charges minérales ou d'élastomère pour lui donner la résistance et la dureté souhaitée. Son module de Young est par exemple compris entre 200 et 5000 Mpa.

Pour la mise en œuvre du système d'habillage sur la paroi P, on fixe des montants verticaux, non représentés, en veillant à ce qu'ils présentent une face dans un même plan. Ensuite, on fixe les rails 20 à l'horizontale avec des écartements prédéterminés sur ladite face des montants. On prévoit au dos des plaques 10 les trous 100 borgnes avec un diamètre calibré, et répartis en fonction de la position attendue des éléments d'accrochage 3. On introduit en force les tétons 30 des éléments d'accrochage 3 dans les trous 100. Comme le montre la figure 2, on peut pour cela utiliser un maillet en frappant sur la semelle 31 au droit du téton 30 concerné. L'ensemble ainsi constitué est ensuite plaqué contre les rails 20, puis glissé verticalement vers le bas pour que les crochets 32 viennent en prise avec les contre-crochets des rails 20. Si besoin, on peut faire glisser horizontalement l'ensemble de parement 1 pour ajuster sa position relative à l'ensemble adjacent. Les dilatations de la plaque de parement 10 sont permises horizontalement sur les rails 20 et verticalement entre les crochets 32 et contre-crochets 202.

On a soumis des éléments d'accrochage 3 à des essais d'arrachement. Un échantillon de plaque 10 est muni de deux trous 100 borgnes qui reçoivent les tétons 30 d'un élément d'accrochage 3. On fixe la plaque 10 et on introduit une barre ronde dans le crochet 32. La barre ronde est fixée à un câble qui permet d'exercer une traction sur le crochet 32 perpendiculairement au plan de l'échantillon. On mesure la force maximale exercée jusqu'à l'arrachement ou la rupture.

Avec une plaque 10 en composite fibres de bois et ciment d'épaisseur 12 mm, des tétons 30 de diamètre extérieur 6,72 mm et des trous de diamètre 6,35 mm, soit une différence de diamètres de 5,5 %, on a relevé sur plusieurs essais une moyenne de forces à la rupture de 120 daN. La rupture était en général l'extraction d'un ou des deux tétons 30.

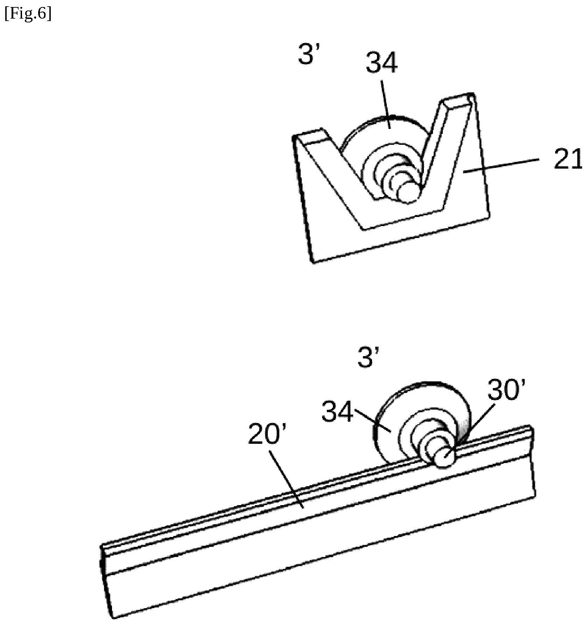

Dans un deuxième mode de réalisation, montré sur la figure 6, l'élément d'accrochage 3' ne comporte qu'un téton 30' qui surmonte une base 34 de forme tronconique. La base 34 vient en prise avec un rail 20' qui s'interpose entre la base 34 et la plaque, non représentée, recevant le téton 30. Dans une variante, la base 34 est en prise avec un support 21 en V.

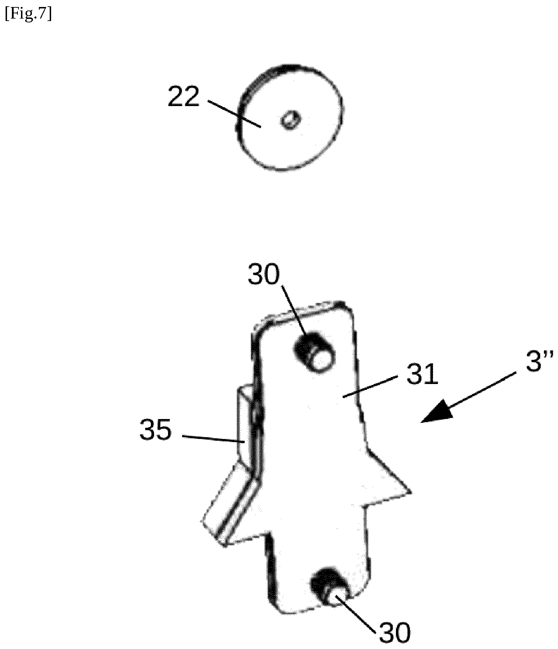

Dans un troisième mode de réalisation, montré sur la figure 7, l'élément d'accrochage 3" comporte une semelle 31 et deux tétons 30, comme dans le premier mode de réalisation, mais il est complété par des ailes de guidage 35, ce qui permet à l'élément d'accrochage 3" de venir en prise avec un bouton champignon 22, de faciliter son insertion sur le bouton champignon 22 et de limiter le mouvement possible latéralement.

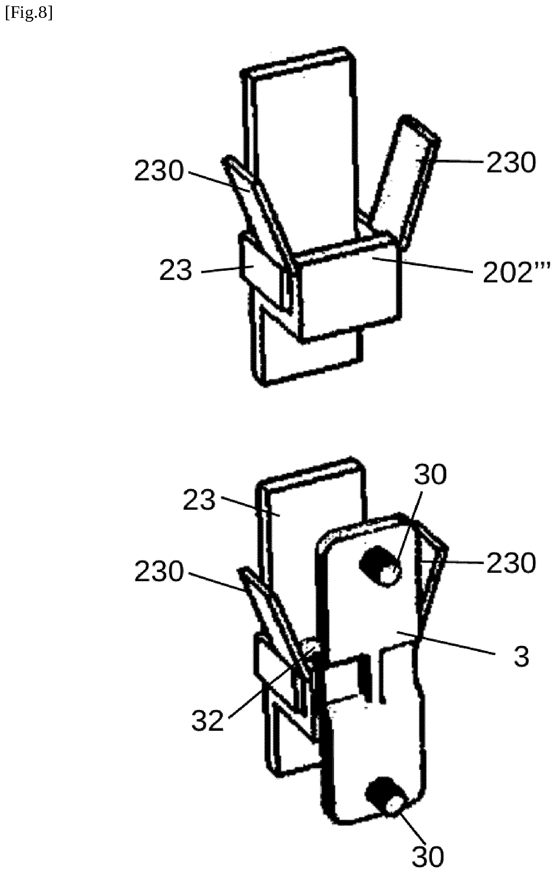

Dans un quatrième mode de réalisation, montré sur la figure 8, le système d'habillage comporte un support 23 comportant le contre-crochet 202'" d'une largeur légèrement supérieure à celle du crochet 32. Le support 23 comporte en outre deux ailes de guidage 230 permettant de centrer le crochet 32 sur le contre-crochet 202'".

Dans un cinquième mode de réalisation, montré sur la figure 8, la semelle 31⁴ de l'élément d'accrochage 3⁴ est de forme sensiblement carrée et comporte un téton 30 à chaque angle, soit quatre tétons 30. L'élément d'accrochage 3⁴ comporte en outre trois ailes, dont deux ailes latérales 36 font saillie le long de deux bords de la semelle 31 parallèles entre eux et une aile supérieure 37 le long d'un troisième bord de la semelle 31. Les ailes 36, 37 se terminent par des griffes 360, 370. L'élément d'accrochage 3⁴ vient en prise avec un support 24 dont une plateforme 240 est surélevée. Les griffes 360, 370 viennent en prise par encliquetage avec les bords de la plateforme 24. Alternativement, l'accrochage peut être réalisé par glissement dans le sens vertical jusqu'à ce que l'aile supérieure 37 vienne en butée contre la plateforme 240.

## Revendications

1. Ensemble de parement comportant une plaque (10) de parement et au moins un élément d'accrochage (3) fixé au dos de la plaque (10), **caractérisé en ce que** l'élément d'accrochage (3) comporte au moins un téton (30) faisant saillie d'une surface d'appui (310) d'une semelle (31) selon un axe de téton (30) et se logeant dans un trou (100) de la plaque (10), chaque téton (30) présentant un profil en dents (301), le sommet des dents (301) étant compris dans un cylindre extérieur de diamètre dit extérieur (D) supérieur à celui du trou (100), la base des dents (301) étant comprise dans un cylindre de diamètre dit de base (b) inférieur à celui du trou (100), le sommet des dents (301) étant en forme de pointe triangulaire dont la médiatrice à l'extérieur de la pointe est orientée vers la semelle (31).

2. Ensemble selon la revendication 1, dans lequel l'angle au sommet est compris entre 40° et 80°.

3. Ensemble selon la revendication 1 ou 2, dans lequel le pas entre les dents (301) est compris entre 0,5 mm et 1,5 mm, de préférence entre 0,8 mm et 1,2 mm.

4. Ensemble selon l'une des revendications précédentes, dans lequel l'une des faces (302) de la pointe des dents (301) est perpendiculaire à l'axe de téton (30).

5. Ensemble selon l'une des revendications précédentes, dans lequel la profondeur des dents (301) est comprise entre 0,6 et 0,2 mm, de préférence entre 0,5 et 0,3 mm.

6. Ensemble selon l'une des revendications précédentes, dans lequel la différence entre le diamètre extérieur (D) du téton (30) et le diamètre intérieur (d) du trou (100) rapportée au diamètre extérieur (D) du téton (30) est comprise entre 3 % et 12 %, de préférence entre 4 % et 9 %, de préférence entre 5 % et 6 %.

7. Ensemble selon l'une des revendications précédentes, dans lequel la semelle (31) a une forme allongée entre une première et une deuxième extrémité (311, 312), l'élément d'accrochage (3) comportant au moins un téton (30) à chacune des extrémités et un crochet (32) faisant saillie de la semelle (31) sur une surface apparente (313) de la semelle (31) opposée à la surface d'appui (310) sensiblement à équidistance des tétons (30).

8. Ensemble selon la revendication 7, dans lequel le crochet (32) s'étendant sensiblement sur la même largeur que la semelle (31), l'élément d'accrochage (3) comportant une nervure (33) s'étendant à mi-largeur de la semelle (31) en partie sur le crochet (32) et sur la surface apparente (313).

9. Ensemble selon la revendication 7 ou 8, dans lequel le crochet (32) comporte une paroi de rétention (320) sensiblement parallèle à la semelle (31) reliée à la semelle (31) par une paroi de liaison (321), et une paroi de guidage (323) prolongeant la paroi de rétention (320) à l'opposé de la paroi de liaison (321) en s'éloignant de la semelle (31) de sorte à délimiter un espace d'entrée (322) pour guider un support entre la semelle (31) et la paroi de rétention (320).

10. Ensemble selon l'une des revendications 7 à 9, dans lequel la semelle (31) comporte un plateau (34) surélevé par rapport à la surface apparente (313) en regard de la paroi de rétention (320).

11. Ensemble selon l'une des revendications précédentes, dans lequel la matière de l'élément d'accrochage (3) est une matière synthétique ayant un module de Young compris entre 200 et 5000 Mpa et la plaque (10) a un module de Young compris entre 3 et 20 Gpa.

12. Système d'habillage d'un bâtiment comportant une ossature (2) fixée sur le bâtiment, **caractérisé en ce que** l'ossature (2) comporte au moins un contre-crochet (202) et au moins un ensemble selon l'une des revendications 1 à 11, l'ensemble étant suspendu au contre-crochet (202) par l'élément d'accrochage (3).

13. Système habillage selon la revendication 12, dans lequel le contre-crochet (202) fait partie d'un rail (20) destiné à être fixé à l'horizontale.

14. Système d'habillage selon la revendication 13, dans lequel le rail (20) est un profilé en matière synthétique et comporte une base (201) destinée à être fixée à un élément de construction, et un contre-crochet (202) faisant saillie de la base (201) sur lequel l'ensemble est suspendu par l'élément d'accrochage (3).

15. Système d'habillage selon la revendication 13 ou 14, dans lequel le contre-crochet (202) présente une surface supérieure demi-cylindrique.
